# DEMANDE DE BREVET EUROPEEN

(11) **EP 1 037 097 A1**
(43) Date de publication de la demande: **20.09.2000**
(21) Numéro de dépôt: 00400676.3
(22) Date de dépôt: 10.03.2000
(51) Int. Cl.: G02F 1/35

(54) **Limiteur optique**

(30) Priorité: 12.03.1999 FR 9903090
(71) Demandeur: THOMSON-CSF, 75008 Paris (FR)
(72) Inventeur: Collot, Laurent, 94117 Arcueil Cedex (FR); Grolier-Mazza, Valérie, 94117 Arcueil Cedex (FR); Laurent, Nadia, 94117 Arcueil Cedex (FR)

(57) **Abrégé**

L'invention concerne le domaine des limiteurs optiques.

C'est un limiteur optique comportant un milieu (2) à effet non linéaire de seuil d'activation donné, comportant des premiers moyens optiques (1) réalisant la décomposition d'une image en une première matrice de pixels (11) et focalisant séparément chaque pixel (11) dans le milieu (2) à effet non linéaire.

Ce limiteur optique (7) peut notamment être utilisé en tant que contre-contre-mesures optroniques (CCMO) sur des équipements optroniques.

## Description

L'invention concerne le domaine des limiteurs optiques. Les limiteurs optiques sont usuellement utilisés en tant que contre-contre-mesures optroniques (CCMO) sur des équipements optroniques. Les équipements optroniques sont par exemple des équipements de détection, d'alerte ou d'identification qui pour avoir une portée importante et une bonne précision peuvent généralement fonctionner dans des conditions d'éclairement faible. Le domaine spectral des équipements optroniques inclue notamment les domaines du visible, de l'infrarouge et de l'ultraviolet. Pour cela les équipements optroniques possèdent habituellement des dispositifs optiques de grande ouverture et des capteurs très sensibles. La grande brillance des dispositifs de contre-mesures laser par exemple rend ces équipements optroniques très vulnérables aux agressions de ces dispositifs de contre-mesures. Les résultats d'une agression laser sont par exemple un effet d'éblouissement, une lésion irréversible de l'oeil, une destruction de capteur optronique, partielle ou totale. La fonction du limiteur optique sera alors de protéger, soit un équipement optronique, soit l'oeil d'un observateur, contre la menace d'une agression laser qui peut être large bande.

Selon un art antérieur, il est prévu des limiteurs optiques constitués par des filtres photo-activés utilisant un effet non linéaire rapide. Cet effet peut être du type absorption non linéaire, réfraction non linéaire, ou bien diffusion photo-induite et présente généralement un seuil de déclenchement. Ces filtres peuvent atténuer d'un facteur élevé, par exemple 100 ou 1000, des impulsions laser d'intensité supérieure à leur seuil de déclenchement, tout en introduisant une atténuation minime pour des éclairements faibles. Un des inconvénients de l'art antérieur est la valeur du seuil de déclenchement de ces filtres, valeur qui demeure élevée et qui ne permet pas une protection suffisamment efficace pour protéger de l'éblouissement ou de la destruction, l'oeil d'un observateur ou un capteur.

Une caractéristique importante de la solution réside dans l'augmentation locale de la densité d'énergie dans un milieu à effet non linéaire de seuil d'activation donné, au niveau de chaque pixel de l'image. Un avantage résultant est l'abaissement du seuil d'activation de l'effet non linéaire du milieu à effet non linéaire.

Selon l'invention, il est prévu un limiteur optique comportant un milieu à effet non linéaire de seuil d'activation donné caractérisé en ce que le limiteur optique comporte des premiers moyens optiques réalisant la décomposition d'une image en une première matrice de pixels et focalisant séparément chaque pixel dans le milieu à effet non linéaire.

L'invention sera mieux comprise et d'autres particularités et avantages apparaîtront à l'aide de la description ci-après et des dessins joints, donnés à titre d'exemples, où :
- la figure 1 représente schématiquement une réalisation d'un limiteur optique selon l'invention ainsi qu'un dispositif optique intégrant le limiteur optique ;
- la figure 2 représente schématiquement une réalisation d'un limiteur optique selon l'invention ainsi qu'un autre dispositif optique intégrant le limiteur optique ;
- la figure 3 montre une famille de courbes qui représentent schématiquement pour différents limiteurs optiques, en fonction de l'énergie incidente, la transmission par unité d'énergie.

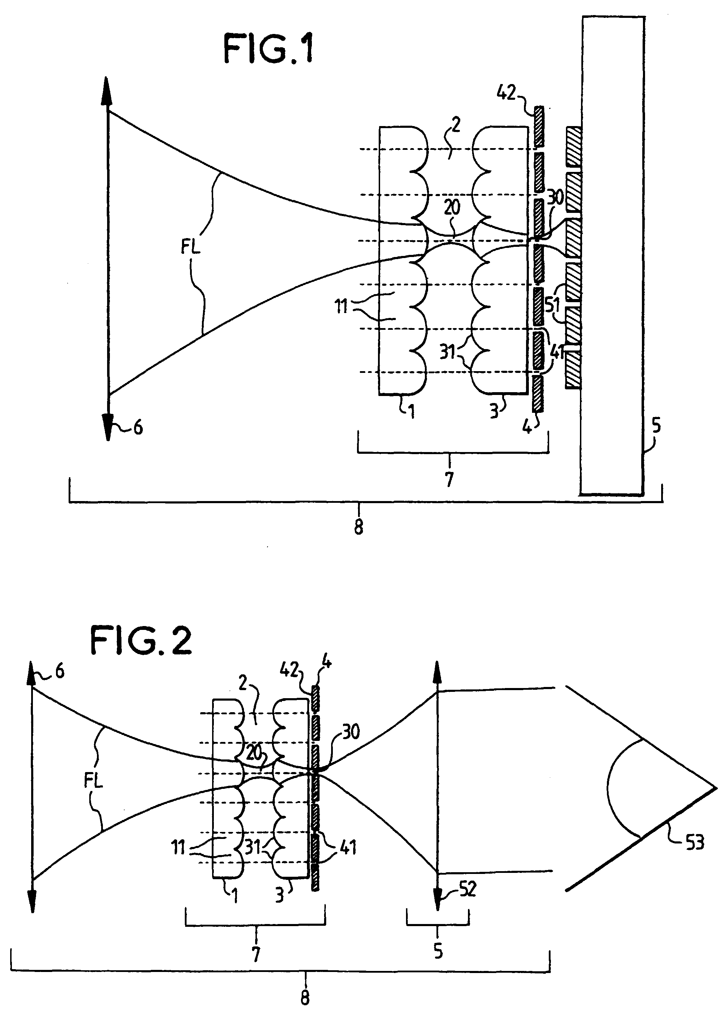

La figure 1 représente schématiquement une réalisation d'un limiteur optique 7 selon l'invention ainsi qu'un dispositif optique 8 intégrant le limiteur optique 7. Le limiteur optique 7 comporte un milieu 2 à effet non linéaire ayant un seuil d'activation donné. Le limiteur optique 7 comporte aussi des premiers moyens optiques 1 réalisant la décomposition du signal lumineux arrivant au niveau de ces premiers moyens optiques 1. L'image formée par le signal lumineux au niveau des premiers moyens optiques 1 est décomposée en une première matrice de pixels 11 par les premiers moyens optiques 1. Chaque pixel 11 est séparément focalisé dans le milieu 2 à effet non linéaire. Considérons par exemple une partie du signal lumineux, le faisceau lumineux FL correspondant à l'un des pixels 11. Le faisceau lumineux FL représenté par une paire de courbes fléchées se propage dans le sens de la flèche considéré comme sens amont-aval. Le faisceau lumineux FL arrive au niveau des premiers moyens optiques 1, couvrant l'étendue d'un pixel 11, traverse les premiers moyens optiques 1, est focalisé au niveau d'une zone 20 du milieu 2 à effet non linéaire. La taille du faisceau FL est minimale au niveau de la zone 20 où la densité d'énergie du faisceau FL est la plus grande. Cette augmentation locale de la densité d'énergie au niveau de la zone 20 entraîne l'activation de l'effet non linéaire du milieu 2 pour un seuil d'énergie du faisceau incident FL qui est plus faible qu'en l'absence des premiers moyens optiques 1. En aval de la zone 20, la taille du faisceau FL augmente à nouveau.

Préférentiellement, le limiteur optique 7 comporte des deuxièmes moyens optiques 3 réalisant la décomposition du signal lumineux arrivant au niveau de ces deuxièmes moyens optiques 3. L'image formée par le signal lumineux au niveau des deuxièmes moyens optiques 3 est décomposée en une deuxième matrice de pixels 31 par les deuxièmes moyens optiques 3. Chaque pixel 31 est séparément focalisé au niveau d'une zone 30 par les deuxièmes moyens optiques 3.

De préférence les première et deuxième matrices sont en correspondance, c'est-à-dire que, comme sur la figure 1, à un pixel 11, il correspond un et un seul pixel 31. La correspondance est indiquée en traits pointillés. Le faisceau FL est alors focalisé au niveau de la zone 30.

Préférentiellement, le limiteur optique comporte des troisièmes moyens optiques 4 qui filtrent spatialement les pixels 31 de la deuxième matrice. Les troisièmes moyens optiques 4 comportent avantageusement des ouvertures 41 permettant de filtrer chacun des pixels 31. Une partie du faisceau lumineux issu d'un pixel 31 traverse l'ouverture 41 correspondante ; une autre partie arrive sur les troisièmes moyens optiques 4 mais pas au niveau des ouvertures 41, elle ne peut alors pas traverser les troisièmes moyens optiques 4. Les troisièmes moyens optiques 4 sont avantageusement situés au niveau du plan focal image des deuxièmes moyens optiques 3. Chaque ouverture 41 est alors voisine d'une zone 30 de focalisation ou confondue avec. Le milieu à effet non linéaire 2 présente un ou généralement plusieurs effets non linéaires, par exemple d'absorption non linéaire et de réfraction non linéaire. En fait, ces effets souvent ne sont pas totalement indépendants les uns des autres. En effet, par exemple, une forte intensité lumineuse peut amener une certaine absorption dégageant une certaine chaleur laquelle résulte en une modulation d'indice dans le milieu à effet non linéaire ; cette modulation est alors la source d'un effet réfractif non linéaire. Lorsque le seuil d'activation de l'effet non linéaire est atteint, une partie de l'énergie du faisceau incident FL ne traverse pas l'ouverture 41 parce qu'elle a été absorbé dans le milieu 2. De même, une autre partie de l'énergie du faisceau incident FL ne traverse pas l'ouverture 41 parce qu'elle correspond à des modes transverses d'ordre élevé du faisceau FL déformé par l'effet de réfraction non linéaire : en effet, ces modes transverses d'ordre élevé arrivent sur des endroits des troisièmes moyens optiques 4 autres que les ouvertures 41. Les troisièmes moyens optiques 4 de filtrage spatial permettent ainsi de réjecter sélectivement la distorsion introduite par le milieu 2 à effet non linéaire, lorsque le seuil d'activation de l'effet non linéaire est atteint. L'effet de la dissipation d'une partie de l'énergie des faisceaux incidents FL dans le milieu 2 non linéaire a de cette manière moins d'effet sur la qualité du signal lumineux en aval des troisièmes moyens optiques 4. Le limiteur optique 7 est dit dispersif.

Le milieu 2 peut être un colorant à absorption saturable inverse ou un matériau présentant un phénomène dit « d'absorption à deux photons ». Des exemples de colorants à absorption saturable inverse sont les porphyrines, les phtalocyanines, les fullérènes, qui sont surtout utilisables dans les domaines spectraux du visible et du proche infrarouge. De préférence, le milieu 2 à effet non linéaire présente un effet réfractif non linéaire suffisant pour que lorsque le seuil d'activation de l'effet non linéaire est atteint, une proportion de l'énergie du faisceau FL incident supérieure à un taux donné soit déviée par l'effet non linéaire de manière à ne pas traverser les troisièmes moyens optiques 4. Ce taux dépend de l'application envisagée. Un fort effet réfractif non linéaire permet d'éviter l'échauffement excessif du milieu 2 à effet non linéaire qui serait provoqué par une absorption trop importante.

Préférentiellement, les troisièmes moyens optiques 4 comprennent un masque possédant une face réfléchissante 42 située du côté des deuxièmes moyens optiques 3 et percée d'ouvertures 41 placées en regard des différents pixels 31 de la deuxième matrice. Le caractère en regard des pixels 31 et des ouvertures 41 est indiqué par les traits pointillés. La couche réfléchissante 42 permet de renvoyer vers l'amont du limiteur optique 7 la proportion d'énergie déviée par l'effet non linéaire. Avantageusement, le masque est une couche métallique perforée déposée sur les deuxièmes moyens optiques 3. Le dépôt sélectif d'une telle couche métallique comporte généralement deux phases, une phase de déposition de résine photosensible sur les deuxièmes moyens optiques 3 suivie d'une phase d'insolation par rayonnement en amont des deuxièmes moyens optiques 3.

Le limiteur optique a deux fonctionnements distincts selon que l'énergie du faisceau incident FL est suffisamment faible pour que l'effet non linéaire du milieu 2 ne soit pas activé ou au contraire est suffisamment forte pour que l'effet non linéaire du milieu 2 soit activé.

Dans le cas d'une énergie suffisamment faible, le faisceau FL est focalisé par les premiers moyens optiques 1 au niveau d'une zone 20 du milieu 2. Le seuil d'activation du ou des effets non linéaires du milieu 2 n'est pas atteint. Le faisceau FL n'est ni absorbé, ni dévié, ou très peu. Le faisceau FL focalisé au niveau de la zone 20 est à nouveau focalisé au niveau d'une zone 30 par les deuxièmes moyens optiques 3. Le faisceau FL traverse ensuite une ouverture 41 des troisièmes moyens optiques 4.

Dans le cas d'une énergie suffisamment forte, le faisceau FL est focalisé par les premiers moyens optiques 1 au niveau d'une zone 20 du milieu 2. Le seuil d'activation du ou des effets non linéaires du milieu 2 est atteint. Une partie du faisceau FL est absorbée et/ou déviée substantiellement. Le faisceau FL focalisé au niveau de la zone 20 est à nouveau focalisé au niveau d'une zone 30 par les deuxièmes moyens optiques 3. Mais la partie du faisceau FL substantiellement déviée est à nouveau focalisée par les deuxièmes moyens 3 à un autre endroit qu'au niveau d'une ouverture 41 : cette partie est alors réfléchie sur la partie réfléchissante 42 des troisièmes moyens optiques 4, puis renvoyée vers l'amont du limiteur optique 7.

Le mécanisme précédemment décrit a l'avantage d'être réalisé séparément pour chaque pixel 11 ou 31 du signal lumineux incident. Par conséquent, l'effet d'éblouissement d'une impulsion laser d'agression couvrant un ou plusieurs pixels restera localisée aux pixels en question et n'obscurcira pas les pixels voisins.

Dans un premier mode de réalisation préférentiel du limiteur optique 7, les premiers moyens optiques 1 et/ou les deuxièmes moyens optiques 3 comprennent une matrice de microlentilles. Chaque microlentille de la matrice des premiers moyens optiques 1 correspond à un pixel 11. Chaque microlentille de la matrice des deuxièmes moyens optiques 3 correspond à un pixel 31. Les microlentilles sont avantageusement achromatiques. Entre les matrices de microlentilles se trouve le milieu 2 à effet non linéaire. Ce milieu 2 est par exemple sous forme liquide ou bien sous la forme d'une feuille de polymère. Des lames d'air sont éventuellement placées entre la feuille de polymère et les matrices de microlentilles.

Dans un deuxième mode de réalisation du limiteur optique 7, les deuxièmes 3 et troisièmes 4 moyens optiques sont constitués par un élément unique qui est un masque holographique. Le masque holographique réalise alors la même fonction de phase que celle qui était réalisée par l'ensemble constitué des deuxièmes 3 et troisièmes 4 moyens optiques.

Les premiers et deuxièmes modes de réalisation du limiteur optique 7 sont plutôt, mais non exclusivement, à utiliser dans le domaine spectral du visible.

Dans un troisième mode de réalisation du limiteur optique 7, les premiers, deuxièmes, troisièmes moyens optiques et le milieu à effet non linéaire sont constitués par un élément unique qui est un cristal à faces parallèles sur lesquelles sont gravés des éléments diffractifs. Une lame à faces parallèles est par exemple usinée dans un cristal à effet non linéaire. Puis, des éléments diffractifs sont ensuite gravés par exemple par lithographie sur les faces du cristal monolithique.

Le troisième mode de réalisation du limiteur optique 7 est plutôt, mais non exclusivement, à utiliser dans le domaine spectral de l'infrarouge.

Le limiteur optique est avantageusement utilisé dans un dispositif optique. Le dispositif optique comporte alors séquentiellement une optique frontale et un limiteur optique situé au niveau d'un plan focal intermédiaire du dispositif. Le limiteur optique peut facilement être ajouté à un dispositif optique existant dans la mesure où l'épaisseur totale du limiteur optique 7 préférentiel décrit sur les figures 1 ou 2, des premiers moyens optiques 1 aux troisièmes moyens optiques 4 peut être rendue inférieure à 500 microns.

La figure 1 montre un dispositif optique 8 comportant séquentiellement une optique frontale 6, un limiteur optique 7, et un élément de détection 5 qui est ici une matrice 5 de détecteurs élémentaires 51. Chaque détecteur élémentaire 51 est en correspondance avec un pixel 31 de la deuxième matrice. La correspondance est indiquée en traits pointillés. Le dispositif optique 8 est préférentiellement capteur infrarouge. Le dispositif optique 8 peut également être de manière avantageuse un capteur visible-proche infrarouge, c'est-à-dire un capteur couvrant à la fois le domaine du visible et le domaine de l'infrarouge.

La figure 2 montre un dispositif optique 8 comportant séquentiellement une optique frontale 6, un limiteur optique 7, et un élément de détection 5 qui est ici composé par un oculaire 52 derrière lequel peut venir se placer l'oeil 53 d'un utilisateur. Le dispositif optique 8 est préférentiellement est une paire de jumelles fonctionnant dans le domaine spectral du visible.

L'ouverture numérique de l'optique frontale 6 est de préférence inférieure à l'ouverture numérique des premiers moyens optiques 1. Par exemple, l'optique frontale 6 aura un rapport focale à diamètre de l'ordre de cinq tandis que chacune des microlentilles de la première matrice de pixels 11 aura un rapport focale à diamètre de l'ordre de un. Plus ce rapport entre les ouvertures numériques est élevé, plus la surfocalisation du signal lumineux dans le milieu 2 à effet non linéaire est importante, et plus l'augmentation locale densité d'énergie dans le milieu 2 est importante. Dans l'exemple précédent, la tache de focalisation au niveau de la zone 20 a un diamètre environ cinq fois plus faible que le pixel 11 correspondant. L'augmentation locale de la densité d'énergie étant inversement proportionnelle au carré du diamètre de la tache de focalisation, à l'atténuation de propagation près, le seuil d'activation de l'effet non linéaire du milieu 2 est alors considérablement plus faible qu'en l'absence de ce phénomène de surfocalisation. Les microlentilles utilisées sont préférentiellement à courte focale de manière à obtenir une ouverture numérique pour les premier moyens optiques 1 qui soit proche de un.

La taille des pixels 11 au niveau des premiers moyens optiques 1 est avantageusement sensiblement égale à la taille de la tache d'Airy de l'optique frontale 6, c'est-à-dire à la taille de la tache de diffraction de l'optique frontale 6. Ainsi pour une optique frontale 6 donnée, on obtient la meilleure résolution globale du dispositif optique 8 pour une dégradation minimale du signal lumineux et pour une efficacité maximale des premiers moyens optiques 1. En effet, pour une taille de pixels 11 inférieure à la tache d'Airy de l'optique frontale 6, l'efficacité des premiers moyens optiques 1 est inférieure pour une résolution identique. De même, pour une taille de pixels 11 supérieure à la tache d'Airy de l'optique frontale 6, la résolution chute et la qualité du signal lumineux transmis par les premiers moyens optiques 1 est dégradée.

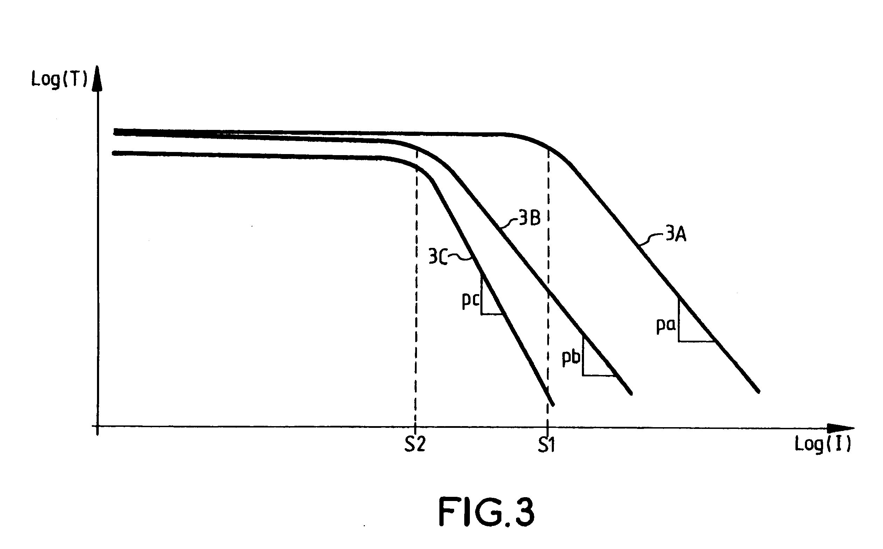

La figure 3 montre une famille de courbes 3A à 3C qui représentent schématiquement pour différents limiteurs optiques, en fonction de l'énergie incidente, la transmission par unité d'énergie. En abscisse est représenté le logarithme Log de l'intensité I du faisceau incident, et en ordonnée est représenté le logarithme Log de la transmission T du limiteur optique par unité d'énergie. Les unités normalisées ne sont pas représentées. Un comportement linéaire du limiteur optique correspondrait à une courbe horizontale.

La courbe 3A représente la courbe obtenue avec un limiteur optique 7 ne comportant qu'un milieu 2 à effet non linéaire du type absorbant saturable inverse, ce limiteur optique appartient à l'art antérieur. La courbe 3B représente la courbe obtenue avec un limiteur optique 7 comportant, en plus du milieu 2 à effet non linéaire du type absorbant saturable inverse, des premiers 1 et deuxièmes 3 moyens optiques. La courbe 3C représente la courbe obtenue avec un limiteur optique 7 comportant, en plus du milieu 2 à effet non linéaire du type absorbant saturable inverse et des premiers 1 et deuxièmes 3 moyens optiques, des troisièmes moyens optiques 4.

Un des effets des premiers moyens optiques 1 est d'abaisser le seuil de déclenchement de l'effet non linéaire, d'une valeur S1 à une valeur S2 plus faible. Plus la valeur du seuil de déclenchement de l'effet non linéaire du limiteur optique est faible, plus le limiteur optique est sensible. Les deuxièmes moyens optiques 3 sont seulement des moyens de reprise d'image, n'influant pas ou peu sur les courbes 3A à 3C. Les valeurs des pentes pa et pb des courbes 3A et 3B restent sensiblement égales. Ces pentes représentent l'importance de l'effet non linéaire : en effet, plus la valeur absolue de la pente est élevée, plus le caractère non linéaire de l'effet non linéaire est important, et plus le filtre est efficace. La partie horizontale des courbes 3A et 3B correspond à une plage de transmission linéaire des limiteurs optiques correspondants.

Un des effets des troisièmes moyens optiques 4 est d'augmenter la valeur absolue de la pente d'une valeur pb à une valeur supérieure pc. Le caractère non linéaire de l'effet non linéaire est plus important au niveau de la courbe 3C qu'au niveau de la courbe 3B. Le limiteur optique à effet non linéaire de la courbe 3C est plus efficace que celui de la courbe 3B lui-même plus sensible que celui de la courbe 3A. Le limiteur optique correspondant à la courbe 3C est par conséquent à la fois plus sensible et plus efficace que le limiteur optique correspondant à la courbe 3A, c'est-à-dire l'absorbant saturable inverse seul.

## Revendications

1. Limiteur optique comportant un milieu (2) à effet non linéaire de seuil d'activation donné, des premiers moyens optiques (1) réalisant la décomposition d'une image en une première matrice de pixels (11) et focalisant séparément chaque pixel (11) dans le milieu (2) à effet non linéaire, des deuxièmes moyens optiques (3) réalisant la décomposition de l'image focalisée par les premiers moyens optiques (1) en une deuxième matrice de pixels (31) et focalisant séparément chaque pixel (31), caractérisé en ce que le limiteur optique (7) comporte des troisièmes moyens optiques (4) filtrant spatialement chaque pixel (31) de la deuxième matrice séparément.

2. Limiteur optique selon la revendication 1, caractérisé en ce que les première et deuxième matrices sont en correspondance.

3. Limiteur optique selon l'une quelconque des revendications 1 à 2, caractérisé en ce que les troisièmes moyens optiques (4) sont situés au niveau du plan focal image des deuxièmes moyens optiques (3).

4. Limiteur optique selon l'une quelconque des revendications 1 à 2, caractérisé en ce que le milieu (2) à effet non linéaire présente un effet réfractif non linéaire suffisant pour que lorsque le seuil d'activation est atteint, une proportion de l'énergie incidente supérieure à un taux donné soit déviée de manière à ne pas traverser les troisièmes moyens optiques (4).

5. Limiteur optique selon l'une quelconque des revendications 1 à 4, caractérisé en ce que les troisièmes moyens optiques (4) comprennent un masque possédant une face réfléchissante (42) située du côté des deuxièmes moyens optiques et percée d'ouvertures (41) placées en regard des différents pixels (31) de la deuxième matrice.

6. Limiteur optique selon la revendication 5, caractérisé en ce que le masque est une couche métallique perforée déposée sur les deuxièmes moyens optiques (3).

7. Limiteur optique selon l'une quelconque des revendications précédentes, caractérisé en ce que les deuxièmes moyens optiques (3) comprennent une matrice de microlentilles.

8. Limiteur optique selon l'une quelconque des revendications précédentes, caractérisé en ce que les premiers moyens optiques (1) comprennent une matrice de microlentilles.

9. Limiteur optique selon l'une quelconque des revendications 7 ou 8, caractérisé en ce que les microlentilles sont achromatiques.

10. Limiteur optique selon l'une quelconque des revendications précédentes, caractérisé en ce que le milieu (2) à effet non linéaire est un colorant à absorption saturable inverse.

11. Limiteur optique selon l'une quelconque des revendications 1 à 4, caractérisé en ce que les deuxièmes (3) et troisièmes (4) moyens optiques sont constitués par un élément unique qui est un masque holographique.

12. Limiteur optique selon l'une quelconque des revendications 1 à 4, caractérisé en ce que les premiers (1), deuxièmes (2), troisièmes (3) moyens optiques et le milieu (2) à effet non linéaire sont constitués par un élément unique qui est un cristal à faces parallèles sur lesquelles sont gravés des éléments diffractifs.

13. Limiteur optique selon l'une quelconque des revendications précédentes, caractérisé en ce que le milieu (2) à effet non linéaire est un matériau présentant un phénomène d'absorption à deux photons.

14. Limiteur optique selon l'une quelconque des revendications précédentes, caractérisé en ce que le milieu (2) à effet non linéaire est un matériau présentant de la réfraction non linéaire.

15. Dispositif optique comportant séquentiellement une optique frontale (6) et un limiteur optique (7) selon l'une quelconque des revendications précédentes situé au niveau d'un plan focal intermédiaire du dispositif optique (8).

16. Dispositif optique selon la revendication 15, caractérisé en ce que le dispositif optique (8) comporte en aval du limiteur optique (7) une matrice (5) de détecteurs élémentaires (51), chaque détecteur élémentaire (51) étant en correspondance avec un pixel (31) de la deuxième matrice.

17. Dispositif optique selon la revendication 16, caractérisé en ce que le dispositif optique (8) est un capteur visible-proche-infrarouge.

18. Dispositif optique selon la revendication 16, caractérisé en ce que le dispositif optique (8) est un capteur infrarouge.

19. Dispositif optique selon la revendication 15, caractérisé en ce que le dispositif optique (8) comporte en aval du limiteur optique (7) un oculaire (52).

20. Dispositif optique selon la revendication 19, caractérisé en ce que le dispositif optique (8) est une paire de jumelles fonctionnant dans le domaine visible.

21. Dispositif optique selon l'une quelconque des revendications 15 à 20, caractérisé en ce que l'ouverture numérique de l'optique frontale (6) est inférieure à l'ouverture numérique des premiers moyens optiques (1).

22. Dispositif optique selon la revendication 21, caractérisé en ce que la taille des pixels (11) au niveau des premiers moyens optiques (1) est sensiblement égale à la taille de la tache d'Airy de l'optique frontale (6).
